# EUROPEAN PATENT APPLICATION

(11) **EP 4 495 625 A1**
(43) Date of publication of application: **22.01.2025**
(21) Application number: 24159289.8
(22) Date of filing: 23.02.2024
(51) Int. Cl.: G01S 7/481, G01S 17/931, B60R 11/00, E05C 19/00

(54) **LIDAR SYSTEM FOR VEHICLES**

(30) Priority: 19.07.2023 KR 20230093715
(71) Applicant: Hyundai Mobis Co., Ltd., Gangnam-gu Seoul 06141 (KR)
(72) Inventor: BYUN, Jae Sup, Yongin-si, Gyeonggi-do 16891 (KR); KIM, Jang Ho, Yongin-si, Gyeonggi-do 16891 (KR)
(74) Representative: Frenkel, Matthias Alexander

(57) **Abstract**

An embodiment provides a LiDAR system for vehicles including a housing having an opening, a LiDAR configured to slide in a front-rear direction within the housing and selectively deployed to the outside through the opening, guide brackets disposed on both side surfaces of the LiDAR and configured to guide sliding movement of the LiDAR, and a locking unit configured to prevent the LiDAR from being pushed into the housing by an external force in a state in which the LiDAR is deployed.

## Description

### CROSS-REFERENCE TO RELATED APPLICATION

This application claims priority to and the benefit of Korean Patent Application No. 10-2023-0093715, filed on July 19, 2023, in the Korean Intellectual Property Office, the disclosure of which is incorporated herein by reference in its entirety for all purposes.

### BACKGROUND

### 1. Field of the Invention

The present invention relates to a LiDAR system for vehicles, and more specifically, to a LiDAR system for vehicles installed on a structure of a vehicle.

### 2. Discussion of Related Art

With the development of vehicle technology, functions such as autonomous parking as well as autonomous driving are being demanded. To perform the functions, a need for a LiDAR is increasing. In general, the LiDAR is mounted on structures such as a bumper or grill of a vehicle and detect objects or structures by sensing the front and rear of the vehicle. However, since the LiDAR is mounted in a state of being exposed to the outside of the vehicle, foreign substances such as dust may attach to a surface when the vehicle is moving. Consequently, problems such as the accuracy of the sensor's measurement values being reduced and the surrounding environment itself not being recognized occur. Therefore, there is a need to improve the problems.

### SUMMARY OF THE INVENTION

The present invention is directed to providing a LiDAR system for vehicles capable of preventing a LiDAR from being contaminated by deploying the LiDAR outside a vehicle only when operation of the LiDAR is required, such as in an autonomous driving mode.

Problems to be solved by the present invention are not limited to those mentioned above, and other problems not mentioned will be clearly understood by those skilled in the art from the following description.

According to an aspect of the present invention, there is provided a LiDAR system for vehicles including a housing having an opening, a LiDAR configured to slide in a front-rear direction within the housing and selectively deployed to the outside through the opening, guide brackets disposed on both side surfaces of the LiDAR and configured to guide sliding movement of the LiDAR, and a locking unit configured to prevent the LiDAR from being pushed into the housing by an external force in a state in which the LiDAR is deployed.

Each of the guide brackets may include a rail extending toward the opening in the front-rear direction, and a sliding groove to which the locking unit is connected is formed on a surface of the rail facing the LiDAR.

The locking unit may include a support fixed to a rear surface of the LiDAR, a stopper having a locking pin inserted into the sliding groove and rotatably coupled to the support, and a plate spring configured to rotate the stopper by applying an elastic force to the stopper through a free end in a state in which a fixed end is fixed to the support.

The stopper may include a first body coupled to a coupling hole formed in the support through a rotating shaft provided on one surface and a second body extending from the first body, the first body may have a contact surface contacting a free end of the plate spring in an elastically deformed state and a locking groove into which the free end of the plate spring is inserted so that the elastic deformation of the plate spring is released, and the second body may have the locking pin on the other surface.

The sliding groove may be partitioned into a straight forward movement section whose lower surface extends horizontally forward, a locking section depressed downward from a tip of the forward movement section, and an unlocking section extending forward while inclined upward from the locking section, and the sliding groove may be partitioned into a straight rear movement section whose upper surface extends horizontally rearward from the unlocking section and a restoration section extending rearward while inclined downward from the rear movement section and facing the forward movement section.

The stopper may be configured so that the locking pin moves straight forward with an elastic force applied to the first body from the plate spring in the forward movement section, the second body rotates downward and thus the locking pin is locked and fixed in the locking section, and the second body rotates upward and thus locking and fixing of the locking pin is released in the unlocking section.

In the unlocking section, the free end of the plate spring may be inserted into the locking groove, and the second body may maintain an upward rotated state.

The stopper may be configured so that the locking pin moves straight rearward in an upward rotated state of the second body in the rear movement section and the second body rotates downward and thus the locking pin is disposed between the restoration section and the forward movement section in the restoration section.

In the restoration section, the free end of the plate spring may maintain the elastically deformed state by coming out of the locking groove and contacting the contact surface.

The LiDAR may have rail holes coupled to the rail on both side surfaces.

### BRIEF DESCRIPTION OF THE DRAWINGS

FIG. 1 is a view schematically illustrating a LiDAR system for vehicles according to an embodiment of the present invention;
FIG. 2 is a view schematically illustrating components of the LiDAR system for vehicles according to the embodiment of the present invention;
FIG. 3 is a view schematically illustrating a first link unit and a gear unit connected to a door;
FIG. 4 is a view schematically illustrating a lower cover of a housing including guide grooves and a sliding groove;
FIGS. 5A and 5B are views schematically illustrating a state in which the door closes an opening and a state in which the door opens the opening, respectively, by operation of the first link unit;
FIG. 6 is a view schematically illustrating a LiDAR, a locking unit, and a guide bracket;
FIG. 7 is a view schematically illustrating a sliding groove provided on a rail of the guide bracket;
FIG. 8 is a view schematically illustrating the locking unit connected to the sliding groove;
FIG. 9 is a view schematically illustrating the locking unit coupled to the LiDAR;
FIG. 10 is a view schematically illustrating a stopper that moves and rotates along the sliding groove;
FIG. 11 is a view illustrating operation of a second lower gear in an operating section and an idling section of a first lower gear;
FIG. 12 is a view illustrating operation of the second lower gear and a second upper gear according to the rotation of the first lower gear and a first upper gear;
FIG. 13 is an operational view illustrating a state in which the door opens the opening; and
FIG. 14 is an operation view illustrating a state in which the LiDAR is deployed to the outside by passing through the opening.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION OF EXEMPLARY EMBODIMENTS

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, embodiments of the present invention will be described in detail with reference to the accompanying drawings, and components which are the same or correspond to each other will be denoted by the same or corresponding reference numerals in all drawings, and redundant descriptions will be omitted.

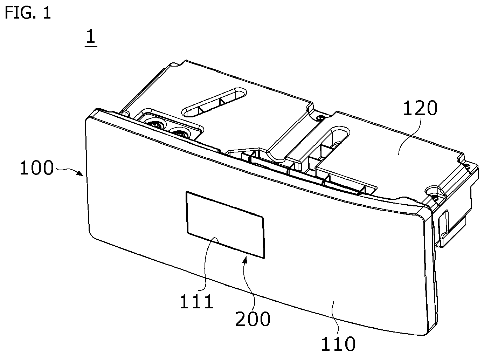

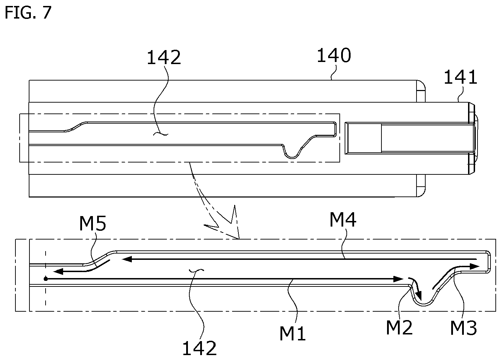

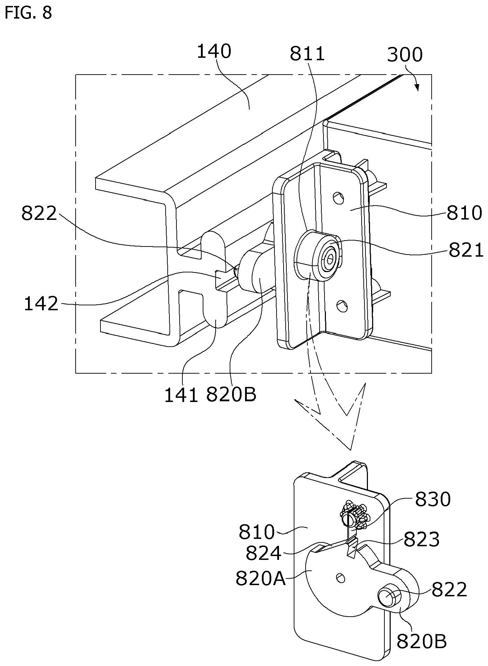

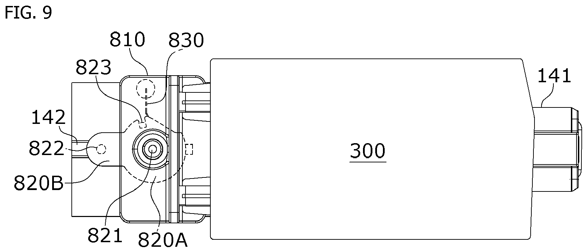

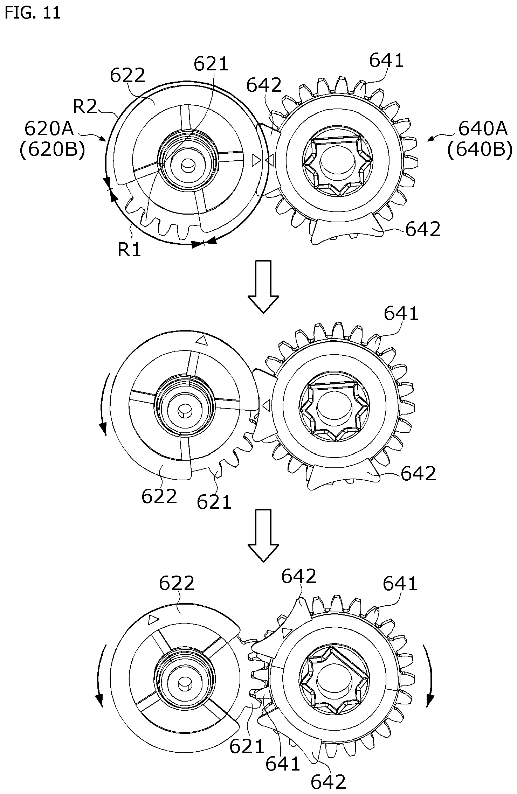

FIGS. 1 to 12 schematically illustrate a LiDAR system for vehicles and components constituting the LiDAR system for vehicles according to an embodiment of the present invention.

A LiDAR system 1 for vehicles according to an embodiment of the present invention may be installed on a structure of a vehicle that is not shown. For example, the LiDAR system 1 may be installed on the back surface of a vehicle's grill, bumper cover, or the like.

Referring to the drawings, the LiDAR system 1 for vehicles according to the embodiment of the present invention may include a housing 100, a door 200, a LiDAR 300, a first link unit 400, and a second link unit 500, and a gear unit 600.

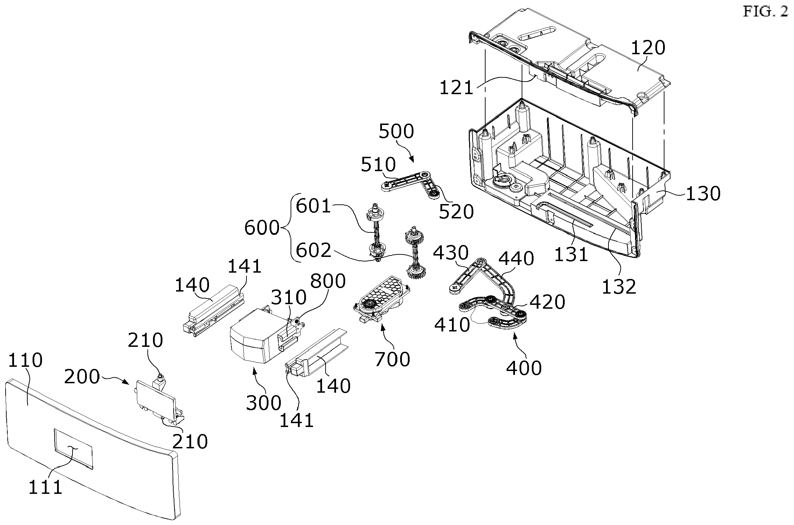

As illustrated in FIG. 2, the housing 100 may have an approximately box-shaped structure with an internal space. The door 200, the LiDAR 300, the first link unit 400, the second link unit 500, and the gear unit 600 may be accommodated in the internal space.

An opening 111 may be formed in a front cover 110, which is a front of the housing 100, and first guide grooves 121 and 131 may be formed in an upper cover 120 and a lower cover 130, respectively. In addition, a second guide groove 132 may be formed in the lower cover 130.

The housing 100 may be provided so that the opening 111 is exposed through the grill or bumper cover in a state of being installed on the grill or bumper cover.

The door 200 and the LiDAR 300 may be disposed inside the housing 100 and configured to move in conjunction with each other to be alternately disposed at the opening 111.

That is, when the vehicle is not in an autonomous driving mode, the LiDAR 300 is stored inside the housing 100, and the opening 111 is closed by disposing the door 200 at the opening 111, and thus the LiDAR 300 is prevented from being contaminated or damaged by external foreign substances. Then, when the vehicle is switched to the autonomous driving mode, the door 200 opens the opening 111, and the LiDAR 300 stored inside the housing 100 is disposed at the opening 111 to be deployed to the outside through the opening 111.

The door 200 is disposed in the housing 100 and configured to slide along the first guide grooves 121 and 131 to selectively open or close the opening 111.

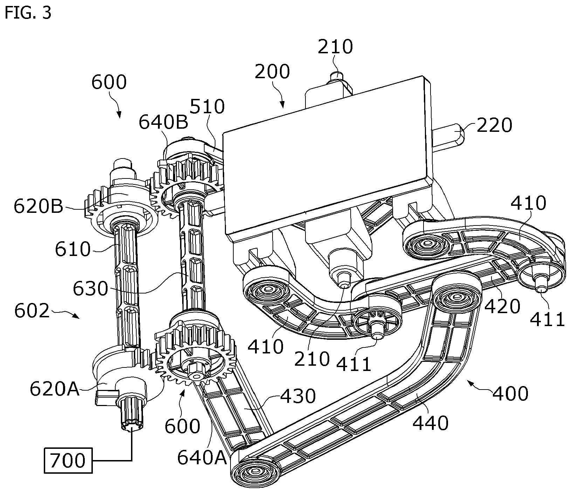

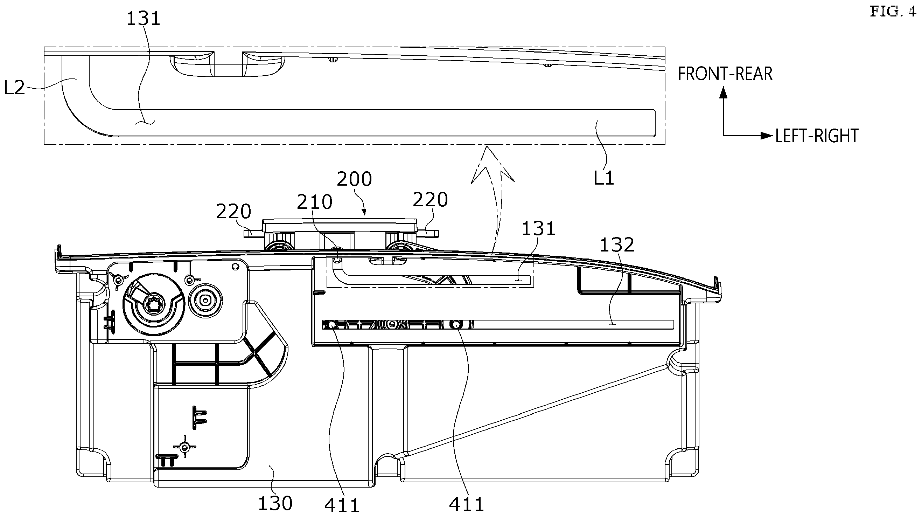

Referring to FIGS. 3 and 4, the door 200 may have guide pins 210 connected to the first guide grooves 121 and 131 on upper and lower surfaces, respectively.

The guide pins 210 may be provided in a structure that protrudes from the upper and lower surfaces of the door 200, respectively, and the door 200 may slide along a trajectory provided by the first guide grooves 121 and 131 through the guide pins 210.

The first guide grooves 121 and 131 may include a first movement section L1 straightly disposed in a left-right direction behind the opening 111 and a second movement section L2 curvedly extending in a front-rear direction from the first movement section L1 toward the opening 111.

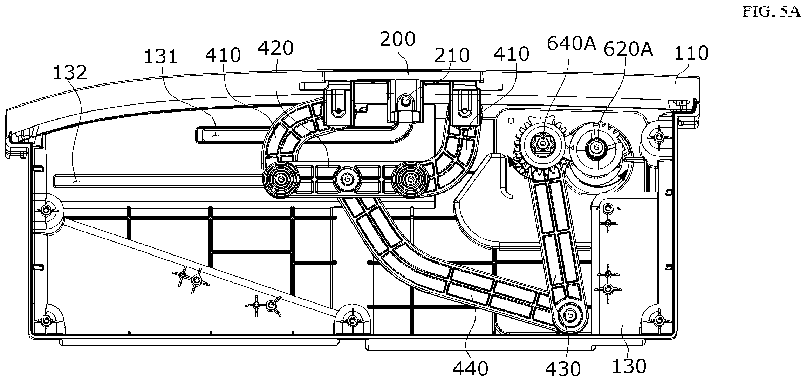

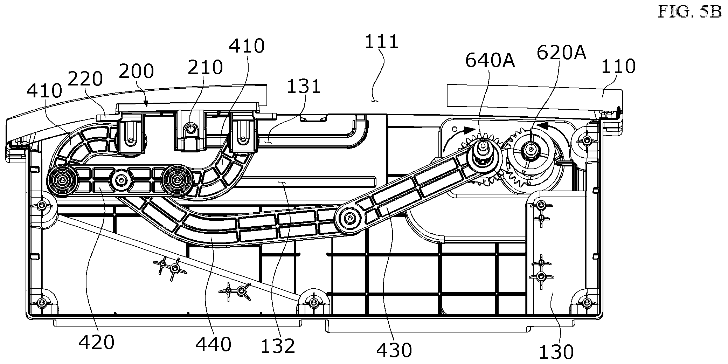

Accordingly, as illustrated in FIGS. 5A and 5B, in a state in which the door 200 is disposed at the opening 111 to close the opening 111, the door 200 may open the opening 111 by moving rearward toward the inside of the housing 100 along the second movement section L2 and moving to the right (or left) along the first movement section L1, and may be hidden on the back surface of the front cover 110. In addition, the door 200 may close the opening 111 by moving to the left (or right) along the first movement section L1 and moving forward toward the outside of the housing 100 along the second movement section L2.

The door 200 may have a stopping protrusion 220 on each of both side surfaces.

The stopping protrusion 220 may serve to prevent the door 200 from further moving forward by being provided to contact the back of the front cover 110 in the state in which the door 200 is disposed at the opening 111 to close the opening 111.

The LiDAR 300 is configured to slide in the front-rear direction within the housing 100 and selectively deployed to the outside through the opening 111.

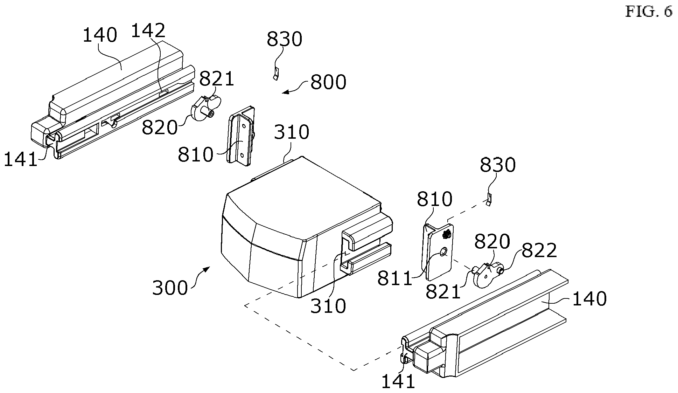

As illustrated in FIGS. 6 to 10, a guide bracket 140 may be provided within the housing 100 to allow the LiDAR 300 to slide forward and rearward. A pair of guide brackets 140 may be provided, disposed on both left and right side surfaces of the LiDAR 300, respectively, and configured to guide sliding movement of the LiDAR 300.

In addition, a locking unit 800 may be attached to the LiDAR 300, and the locking unit 800 may be configured to guide the sliding movement of the LiDAR 300 in conjunction with the guide brackets 140.

First, each of the guide brackets 140 may have a rail 141 extending in the front-rear direction toward the opening 111. In addition, the LiDAR 300 may have rail holes 310 coupled to the rails 141 on both side surfaces.

The rail holes 310 each have a structure that is open in the front-rear direction, so that the LiDAR 300 may reciprocate in the front-rear direction along the trajectory provided by the rails 141 in a state in which the rails 141 are coupled to the rail holes 310.

A sliding groove 142 to which the locking unit 800 is connected may be formed on the surface of the rail 141 facing the LiDAR 300.

Referring to the drawings, the sliding groove 142 may be formed in a structure in which a gap between the upper and lower surfaces is not constant and is variable along a longitudinal direction of the rail 141.

In detail, the sliding groove 142 may be partitioned into a straight forward movement section M1 whose lower surface extends horizontally forward, a locking section M2 depressed downward from a tip of the forward movement section M1 to form a step structure, and an unlocking section M3 extending forward while inclined upward from the locking section M2. In addition, the sliding groove 142 may be partitioned into a straight rear movement section M4 whose upper surface extends horizontally rearward from the unlocking section M3 and a restoration section M5 extending rearward while inclined downward from the rear movement section M4 and facing the forward movement section M1.

The locking unit 800 is attached to the rear surface of the LiDAR 300 so that the LiDAR 300 is prevented from being pushed into the housing 100 by an external force in a state in which the LiDAR 300 is deployed.

The locking unit 800 may include a support 810, a stopper 820, and a plate spring 830.

The support 810 has a structure bent approximately in an "L" shape, and may be fixed to the rear surface of the LiDAR 300 and disposed parallel to a side surface of the LiDAR 300. That is, the support 810 may be fixed to the LiDAR 300 in a structure that extends rearward along the side surface of the LiDAR 300.

The stopper 820 may be rotatably coupled to the support 810. In addition, the plate spring 830 may rotate the stopper 820 by applying an elastic force to the stopper 820 through a free end in a state in which a fixed end is fixed to the support 810.

In an example, the stopper 820 may include a first body 820A and a second body 820B extending from the first body 820A.

The first body 820A has a rotating shaft 821 on one surface, and may be coupled to a coupling hole 811 formed in the support 810 through the rotating shaft 821.

In addition, the first body 820A may have a contact surface 824 contacting a free end of the plate spring 830 in an elastically deformed state, and a locking groove 823 into which the free end of the plate spring 830 is inserted so that the elastic deformation of the plate spring 830 is released. That is, the second body 820B receives a force to rotate toward the lower surface of the LiDAR 300 by an elastic force applied from the plate spring 830 in a state in which the free end of the plate spring 830 contacts the contact surface 824 of the first body 820A, and the elastic deformation of the plate spring 830 is released in a state in which the free end of the second body 820B is inserted into the locking groove 823, so that the second body 820B does not receive the elastic force. In this case, the rotation of the first body 820A is restricted by being caught by the plate spring 830.

The second body 820B may have a locking pin 822 inserted into the sliding groove 142 on the other surface opposite to the one surface.

The locking pin 822 moves within the sliding groove 142 as the stopper 820 slides along the rail 141 together with the LiDAR 300.

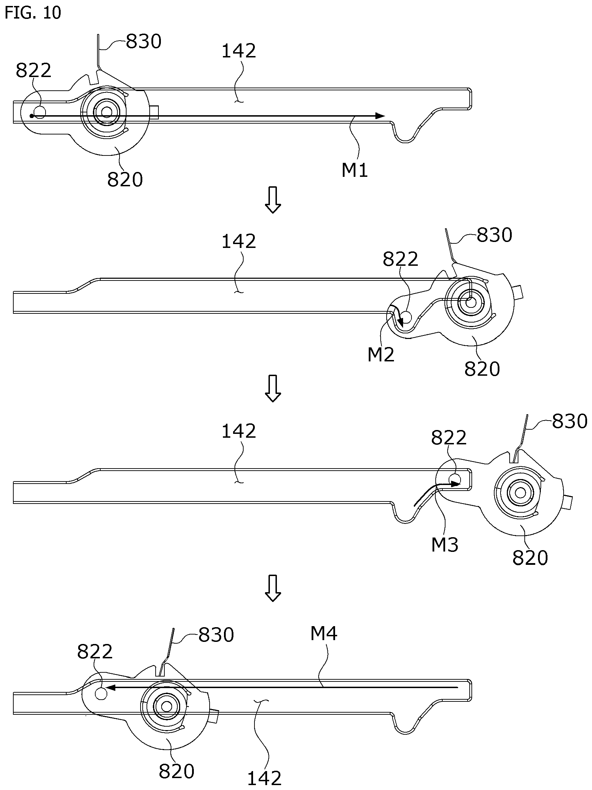

Referring to FIG. 10, as the LiDAR 300 moves forward, the locking pin 822 moves straight forward from its normal position in a state in which an elastic force is applied to the first body 820A from the plate spring 830 in the forward movement section M1.

In addition, in the locking section M2, the second body 820B rotates downward and thus the locking pin 822 is locked and fixed to the step structure. When the locking pin 822 is locked and fixed in this way, the LiDAR 300 is prevented from being pushed rearwards by an external force.

Next, as the LiDAR 300 partially moves forward, the second body 820B rotates upward and thus the locking and fixing of the locking pin 822 is released in the unlocking section M3. In this case, in the unlocking section M3, the free end of the plate spring 830 is inserted into the locking groove 823, and the second body 820B maintains an upward rotated state.

Then, as the LiDAR 300 moves rearward, the locking pin 822 moves straight rearward in the upward rotated state of the second body 820B in the rear movement section M4.

Then, in the restoration section M5, the second body 820B rotates downward and thus the locking pin 822 is disposed between the restoration section and the forward movement section M1, the locking pin 822 returns to its normal position, and the stopper 820 is switched to its initial state.

In this case, in the restoration section M5, the free end of the plate spring 830 comes out of the locking groove 823 as the first body 820A rotates together with the second body 820B and comes into contact with the contact surface 824 so that the free end maintains the elastically deformed state.

In this way, in a process of deploying the LiDAR 300 forward, the locking pin 822 moves along the lower surface of the sliding groove 142 and is locked to the step structure of the sliding groove 142, and thereby, the stopper 820 may prevent the LiDAR 300 from being pushed rearward by an external force. In addition, in a process of storing the LiDAR 300 to the rear, the stopper 820 may be switched to its initial state as the locking pin 822 moves along the upper surface of the sliding groove 142.

Sliding movement of the door 200 and the LiDAR 300 may be implemented through the first link unit 400, the second link unit 500, and the gear unit 600.

The first link unit 400 may be connected to the door 200 and configured to slide the door 200.

Referring to the drawings, the first link unit 400 may include a guide link 410, a connecting link 420, a first door driving link 430, and a second door driving link 440.

A pair of guide links 410 may be provided, and one ends thereof may be rotatably connected to one side and the other side of a bottom surface of the door 200 with respect to the guide pin 210, respectively, and the other ends may be provided with sliding pins 411 and connected to the second guide groove 132 provided in the lower cover 130 of the housing 100. Each of the sliding pins 411 may be provided in a structure that protrudes downward from a lower surface of the guide link 410 at the other end thereof.

One end and the other end of the connecting link 420 may be rotatably connected to the other ends of the pair of guide links 410, respectively. In this case, the connecting link 420 may be connected to the other surfaces of the guide links 410 opposite to the surfaces where the sliding pin 411 is provided at the other ends of the guide links 410. That is, the connecting link 420 may be connected to upper surfaces of the guide links 410 at the other ends thereof.

The first door driving link 430 may be connected to the gear unit 600 and rotate by power of an actuator 700 transmitted through the gear unit 600. In an example, the first door driving link 430 may have one end connected to a second lower gear 640A of the gear unit 600 and rotate together with the second lower gear 640A using the second lower gear 640A as a rotation axis.

The second door driving link 440 may have one end rotatably connected to the other end of the first door driving link 430, and the other end rotatably connected to the connecting link 420.

The second door driving link 440 implements sliding movement of the door 200 in the left-right direction by converting a rotational movement of the first door driving link 430 into a linear movement in the left-right direction based on the opening 111 in conjunction with the connecting link 420 and causing the guide link 410 to linearly reciprocate along the second guide groove 132 together with the connecting link 420. In this case, the door 200 slides while maintaining a state in which its front surface faces forward.

The second link unit 500 may be connected to the LiDAR 300 and configured to slide the LiDAR 300.

As illustrated in FIG. 3, the second link unit 500 may include a first LiDAR driving link 510 and a second LiDAR driving link 520.

The first LiDAR driving link 510 may be connected to the gear unit 600 and rotate by power of the actuator 700 transmitted through the gear unit 600. In an example, the first LiDAR driving link 510 may have one end connected to a second upper gear 640B of the gear unit 600 and rotate together with the second upper gear 640B using the second upper gear 640B as a rotation axis.

The second LiDAR driving link 520 may have one end rotatably connected to the other end of the first LiDAR driving link 510, and the other end rotatably connected to the LiDAR 300.

The second LiDAR driving link 520 implements sliding movement of the LiDAR 300 in the front-rear direction by converting a rotational movement of the first LiDAR driving link 510 into a linear movement in the front-rear direction based on the opening 111.

The gear unit 600 may be configured to transmit power of the actuator 700 to the first link unit 400 and the second link unit 500.

The gear unit 600 may include a first gear unit 601 and a second gear unit 602.

Referring to the drawings, the first gear unit 601 may rotate by being connected to the actuator 700, and the second gear unit 602 may transmit power of the actuator 700 to the first link unit 400 and the second link unit 500 by being connected to the first gear unit 601.

The first gear unit 601 may include a first shaft 610 connected to the actuator 700, a first lower gear 620A provided at a lower portion of the first shaft 610, and a first upper gear 620B provided at an upper portion of the first shaft 610. The first lower gear 620A and the first upper gear 620B are fitted and fixed to the first shaft 610 and configured to rotate integrally with the first shaft 610.

The second gear unit 602 may include a second shaft 630 disposed in parallel with the first shaft 610, a second lower gear 640A provided at a lower portion of the second shaft 630, and a second upper gear 640B provided at an upper portion of the second shaft 630. The second lower gear 640A and the second upper gear 640B are each rotatably connected to the second shaft 630 and configured to rotate individually.

The first lower gear 620A and the second lower gear 640A may be engaged with each other, and the first upper gear 620B and the second upper gear 640B may be engaged with each other.

The second lower gear 640A may be connected to the first link unit 400, and the second upper gear 640B may be connected to the second link unit 500. In detail, the second lower gear 640A may be connected to the first door driving link 430 of the first link unit 400, and the second upper gear 640B may be connected to the first LiDAR driving link 510 of the second link unit 500. In this case, the first door driving link 430 may be fitted into the second lower gear 640A to form binding, and the first LiDAR driving link 510 may be fitted into the second upper gear 640B to form binding.

The first shaft 610 rotates as one end thereof is connected to the actuator 700, and the first lower gear 620A and the first upper gear 620B integrally rotate together with the first shaft 610. In addition, the second lower gear 640A engages with the first lower gear 620A and rotates about the second shaft 630, and the second upper gear 640B engages with the first upper gear 620B and rotates about the second shaft 630.

Outer circumferential surfaces of the first lower gear 620A and the first upper gear 620B may each be divided into an operating section R1 where first teeth 621 are formed and an idling section R2 where a rim 622 is formed. Specifically, the first teeth 621 may be formed in a section that is a part of the outer circumferential surface of each of the first lower gear 620A and the first upper gear 620B, and the rim 622 may be formed in a remaining part. In addition, a part of the section where the first teeth 621 are formed may correspond to the operating section R1, and the remaining section where the rim 622 is formed may correspond to the idling section R2.

The rim 622 may be formed in a structure that protrudes radially from an upper portion of the first teeth 621. That is, the rim 622 may be positioned at a higher level than the first teeth 621. In addition, the rim 622 may have an outer surface that protrudes and is curved surface in an arc shape.

Each of the second lower gear 640A and the second upper gear 640B may include second teeth 641 formed on an outer circumferential surface thereof and engaged with the first teeth 621 and a contactor 642 contacting the rim 622. Specifically, the second teeth 641 may be formed along the outer circumferential surface of each of the second lower gear 640A and the second upper gear 640B, and the contactor 642 may be formed in a structure that protrudes radially from an upper portion of the second teeth 641.

In an example, at least one contactor 642 may be provided in a section that is a part of the outer circumferential surface of each of the second lower gear 640A and the second upper gear 640B. The present example illustrates that two contactors 642 are provided spaced apart at a predetermined interval, but is not limited thereto. In addition, the contactor 642 may have an outer surface that is concave and curved in an arc shape corresponding to a shape of the outer surface of the rim 622.

As the first lower gear 620A and the first upper gear 620B rotate, in the operating section R1, the first teeth 621 engage with the second teeth 641 of the second lower gear 640A and the second upper gear 640B, so that the second lower gear 640A and the second upper gear 640B are rotated. That is, as the first teeth 621 engage with the second teeth 641 in the operating section R1, the second lower gear 640A and the second upper gear 640B rotate together with the first lower gear 620A and the first upper gear 620B.

In addition, the rim 622 of each of the first lower gear 620A and the first upper gear 620B contacts the contactor 642 and slides in the idling section R2, so that the second lower gear 640A and the second upper gear 640B do not rotate. That is, in the idling section R2, as the second teeth 641 do not engage with the first teeth 621, and the contactor 642 and the rim 622 slide against each other in a state of being in contact with each other, the second lower gear 640A and the second upper gear 640B do not rotate, and the first lower gear 620A and the first upper gear 620B idle.

Meanwhile, the operating section R1 in the first lower gear 620A and the operating section R1 in the first upper gear 620B may be disposed at different positions in a circumferential direction. Specifically, when viewed from above about the first shaft 610, the operating section R1 provided with the first teeth 621 of the first lower gear 620A and the operating section R1 provided with the first teeth 621 of the first upper gear 620B may be disposed not to overlap each other but to be offset. For example, the operating sections may be disposed so that the operating section R1 of the first upper gear 620B begins after the operating section R1 of the first lower gear 620A ends based on a clockwise direction.

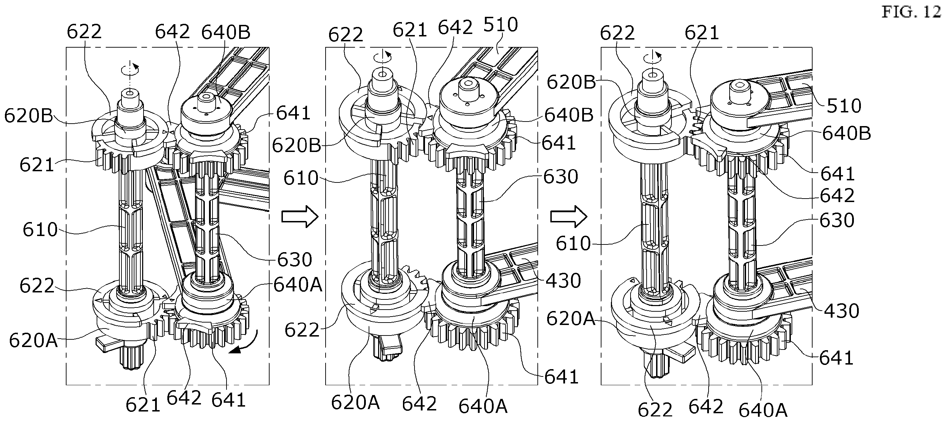

Accordingly, as illustrated in FIG. 12, when the first lower gear 620A and the first upper gear 620B rotate counterclockwise about the first shaft 610, the second lower gear 640A and the second upper gear 640B sequentially rotate by the operating section R1 of the first lower gear 620A and the operating section R1 of the first upper gear 620B.

That is, the second lower gear 640A that meets the operating section R1 of the first lower gear 620A rotates together with the first lower gear 620A, and the second upper gear 640B that meets the idling section R2 of the first upper gear 620B is stopped in a non-rotated state, and only the first upper gear 620B idles.

In addition, the second lower gear 640A that meets the idling section R2 of the first lower gear 620A is stopped in the non-rotated state, only the first lower gear 620A idles, and the second upper gear 640B that meets the operating section R1 of the first upper gear 620B rotates together with the first upper gear 620B.

Conversely, when the first lower gear 620A and the first upper gear 620B rotate clockwise, the second upper gear 640B rotates first, and when the second upper gear640B stops rotating, the second lower gear 640A rotates.

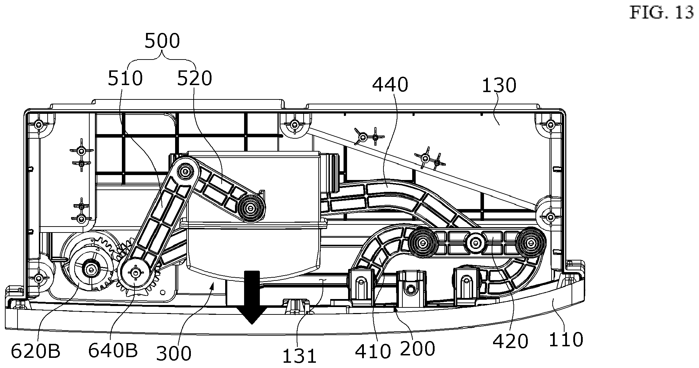

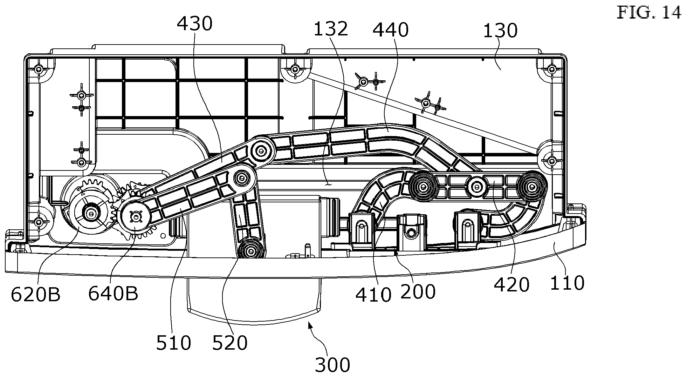

The operation of the LiDAR system for vehicles according to an embodiment of the present invention will be described with reference to FIGS. 13 and 14.

FIG. 13 is an operational view illustrating a state in which the door opens the opening, and FIG. 14 is an operational view illustrating a state in which the LiDAR is deployed to the outside by passing through the opening.

As illustrated in FIG. 13, when the actuator 700 operates and the first gear unit 601 rotates, the second lower gear 640A engaged with the operating section R1 of the first lower gear 620A rotates and moves the first link unit 400, and the door 200 connected to the first link unit 400 slides, so that the opening 111 is opened.

The second upper gear 640B engaged with the idling section R2 of the first upper gear 620B is stopped without rotating as the first upper gear 620B idles, and the LiDAR 300 connected to the second link unit 500 maintains a state of being stored in the housing 100.

As illustrated in FIG. 14, in a state in which the door 200 opens the opening 111, the second lower gear 640A engaged with the idling section R2 of the first lower gear 620A is stopped without rotating as the first lower gear 620A idles, and when the second upper gear 640B engaged with the first upper gear 620B in the operating section R1 rotates and moves the second link unit 500, the LiDAR 300 connected to the second link unit 500 slides and is deployed to the outside through the opening 111.

Then, when the autonomous driving mode ends, the actuator 700 operates, and when the first gear unit 601 rotates in the opposite direction, the second upper gear 640B rotates first and stores the LiDAR 300 inside the housing 100 in conjunction with the second link unit 500, and the second lower gear 640A rotates and slides the door 200 in conjunction with the first link unit 400, so that the opening 111 is closed.

As described above, according to an embodiment of the present invention, by configuring the LiDAR 300 to be selectively deployed outside a vehicle or stored inside the vehicle depending on a driving mode of the vehicle, it is possible to prevent the performance of the LiDAR 300 from deteriorating due to contamination by external foreign substances.

In addition, by blocking the opening 111 through which the LiDAR 300 is deployed to the outside with the door 200 in a state in which the LiDAR 300 is stored, it is possible to protect the LiDAR 300 from external environments and to prevent occurrence of a design difference on the exterior of the vehicle due to the opening 111 being opened.

In addition, by configuring the LiDAR 300 to be locked and fixed by the locking unit 800 in a deployed state, it is possible to prevent the LiDAR 300 from being pushed into the vehicle by the action of external force.

According to an embodiment of the present invention, it is possible to provide a LiDAR system for vehicles capable of preventing a LiDAR from being contaminated by deploying the LiDAR outside a vehicle only when operation of the LiDAR is required, such as in an autonomous driving mode.

An effect of the present invention is not limited to that mentioned above, and other effects not mentioned will be clearly understood by those skilled in the art from the description of claims.

## Claims

1. A LiDAR system for vehicles comprising:
a housing having an opening;
a LiDAR configured to slide in a front-rear direction within the housing and selectively deployed to the outside through the opening;
guide brackets disposed on both side surfaces of the LiDAR and configured to guide sliding movement of the LiDAR; and
a locking unit configured to prevent the LiDAR from being pushed into the housing by an external force in a state in which the LiDAR is deployed.

2. The LiDAR system for vehicles of claim 1, wherein each of the guide brackets includes a rail extending toward the opening in the front-rear direction, and a sliding groove to which the locking unit is connected is formed on a surface of the rail facing the LiDAR.

3. The LiDAR system for vehicles of claim 2, wherein the locking unit includes:
a support fixed to a rear surface of the LiDAR;
a stopper having a locking pin inserted into the sliding groove and rotatably coupled to the support; and
a plate spring configured to rotate the stopper by applying an elastic force to the stopper through a free end in a state in which a fixed end is fixed to the support.

4. The LiDAR system for vehicles of claim 3, wherein the stopper includes a first body coupled to a coupling hole formed in the support through a rotating shaft provided on one surface of the first body and a second body extending from the first body,
the first body has a contact surface contacting the free end of the plate spring in an elastically deformed state and a locking groove into which the free end of the plate spring is inserted so that the elastic deformation of the plate spring is released, and
the second body has the locking pin on the other surface of the first body opposite to the one surface.

5. The LiDAR system for vehicles of claim 4, wherein the sliding groove is partitioned into a straight forward movement section whose lower surface extends horizontally forward, a locking section depressed downward from a tip of the forward movement section, and an unlocking section extending forward while inclined upward from the locking section, and
the sliding groove is partitioned into a straight rear movement section whose upper surface extends horizontally rearward from the unlocking section and a restoration section extending rearward while inclined downward from the rear movement section and facing the forward movement section.

6. The LiDAR system for vehicles of claim 5, wherein the stopper is configured so that the locking pin moves straight forward with an elastic force applied to the first body from the plate spring in the forward movement section, the second body rotates downward and thus the locking pin is locked and fixed in the locking section, and the second body rotates upward and thus locking and fixing of the locking pin is released in the unlocking section.

7. The LiDAR system for vehicles of claim 6, wherein in the unlocking section, the free end of the plate spring is inserted into the locking groove, and the second body maintains an upward rotated state.

8. The LiDAR system for vehicles of claim 6 or 7, wherein the stopper is configured so that the locking pin moves straight rearward in an upward rotated state of the second body in the rear movement section and the second body rotates downward and thus the locking pin is disposed between the restoration section and the forward movement section in the restoration section.

9. The LiDAR system for vehicles of claim 8, wherein in the restoration section, the free end of the plate spring maintains the elastically deformed state by coming out of the locking groove and contacting the contact surface.

10. The LiDAR system for vehicles of any one of claims 2 to 9, wherein the LiDAR has rail holes coupled to the rail on both side surfaces.
